# EUROPÄISCHE PATENTSCHRIFT

(11) **EP 1 264 426 B1**
(45) Veröffentlichungstag und Bekanntmachung des Hinweises auf die Patenterteilung: **06.06.2007**
(21) Anmeldenummer: 01913574.8
(22) Anmeldetag: 06.02.2001
(51) Int. Cl.: H04B 10/17

(54) **RAMANVERSTÄRKERANORDNUNG**
RAMAN AMPLIFIER SYSTEM
ENSEMBLE AMPLIFICATEUR RAMAN

(30) Priorität: 16.03.2000 DE 10012881
(43) Veröffentlichungstag der Anmeldung: 11.12.2002
(73) Patentinhaber: SIEMENS AKTIENGESELLSCHAFT, 80333 München (DE)
(72) Erfinder: CREMER, Cornelius, 85586 Poing (DE)
(86) Internationale Anmeldenummer: PCT/DE2001/000446
(87) Internationale Veröffentlichungsnummer: WO 2001/069821

(56) Entgegenhaltungen:
- EP-A- 0 708 538
- WO-A-99/57822
- KATO T ET AL: "Ultra-low nonlinearity low-loss pure silica core fibre for long-haul WDM transmission" ELECTRONICS LETTERS,IEE STEVENAGE,GB, Bd. 35, Nr. 19, 16. September 1999 (1999-09-16), Seiten 1615-1617, XP006012676 ISSN: 0013-5194 in der Anmeldung erwähnt
- OKUNO T ET AL: "Silica-based functional fibers with enhanced nonlinearity and their applications" IEEE JOURNAL OF SELECTED TOPICS IN QUANTUM ELECTRONICS, SEPT.-OCT. 1999, IEEE, USA, Bd. 5, Nr. 5, Seiten 1385-1391, XP002172423 ISSN: 1077-260X
- BRANDON E ET AL: "Raman limited, truly unrepeatered transmission at 2.5 Gbit/s over 453 km with +30 dBm launch signal power" 24TH EUROPEAN CONFERENCE ON OPTICAL COMMUNICATION. ECOC '98 (IEEE CAT. NO.98TH8398), PROCEEDINGS OF ECOC '98 - 24TH EUROPEAN CONFERENCE ON OPTICAL COMMUNICATION, MADRID, SPAIN, 20-24 SEPT. 1998, Seiten 563-564 vol.1, XP002172424 1998, Madrid, Spain, Telefonica, Spain ISBN: 84-89900-14-0 in der Anmeldung erwähnt

## Beschreibung

Die Erfindung betrifft eine Ramanverstärkeranordnung zur Verstärkung von über ein Übertragungsmedium übertragenen optischen Signalen.

In bestehenden und zukünftigen optischen Übertragungssystemen, insbesondere in nach dem WDM-Prinzip (Wavelength Division Multiplexing) arbeitenden Übertragungssystemen, werden optische Pumpsignale von einer Pumpwelle in eine optische Standard-Einmodenfaser eingekoppelt, um den Einkoppelort vorgelagerte optische Verstärker - beispielsweise Erbium-Verstärker - mit der nötigen optischen Pumpleistung zu versorgen. Desweiteren werden derartige optische Pumpsignale zur direkten Verstärkung von zu übertragenden optischen Signalen benutzt, wobei die durch die optischen Pumpsignale hervorgerufene optische Verstärkung auf den Raman-Effekt basiert. Der Raman-Effekt (engl. "Stimulated Raman Scattering") ist beispielsweise in "Nonlinear Fiber Optics" von Govind P. Agrawal, Academic Press, 1995, auf den Seiten 316 bis 322 beschrieben.

Als eine spezielle Ausführungsform für die Nutzung des Raman-Effektes für optische Verstärkungsprobleme ist der Raman-Vorverstärker bekannt - siehe hierzu beispielsweise "Raman limited, truly unrepeated transmission ad 2.5 Gbit/s over 453 km with + 30 dBm launched signal power", E. Brandon, J.-P. Blondel, Seiten 563 bis 564, ECOC98, 20-24. September 1998, Madrid, Spanien oder Govind P. Agrawal, "Nonlinear Fiber Optics", Academic Press, 1995, auf den Seiten 356 bis 359.

Hierbei wird ein leistungsstarkes optisches Pumpsignal unmittelbar vor der optischen Empfangseinrichtung einer optischen Übertragungsstrecke in die optische Faser eingekoppelt, wobei sich das optische Pumpsignal entgegengesetzt zum optischen Datensignal im optischen Übertragungsmedium bzw. in der optischen Faser ausbreitet. Für dieses leistungsstarke optische Pumpsignal wird aufgrund des Raman-Effektes eine bzw. mehrere von der Wellenlänge des Pumpsignals abhängige Stokeswellen in der optischen Faser erzeugt, welche unterschiedliche optische Signalwellen bzw. optische Signale mit unterschiedlichen Wellenlängen in unterschiedlichen Faserarten verstärken. Bei bislang realisierten Raman-Vorverstärkern werden überlicherweise Wellenlängen von ca. 1450 bis 1460 nm aufweisende optische Pumpsignale verwendet, um Wellenlängen von 1550 bis 1560 nm aufweisende, optische Signale bzw. Datensignale effektiv vorzuverstärken, wobei hierbei die erste Stokeswelle zur Vorverstärkung des optischen Signals benutzt wird. Hierdurch kann die regenerationsfrei überbrückbare Übertragungslänge einer optischen Übertragungsstrecke erheblich verlängert werden, welches insbesondere bei der Realisierung einer optischen Übertragungsstrecke mit Hilfe eines optischen Tiefseekabels von enormen wirtschaftlichen Vorteil ist. Es kann eine um so größere regenerationsfrei überbrückbare Gesamtübertragungslänge der optischen Übertragungsstrecke erreicht werden, je weiter entfernt von dem Einkoppelort des optischen Pumpsignals durch den Ramaneffekt eine möglichst hohe Pumpleistung bzw. Ramanvorverstärkung erzeugt werden kann.

Die maximale Ramanverstärkung ist hierbei durch den Reflexionsverlust der Rayleighrückstreuung in der Übertragungsfaser begrenzt. Die Rayleighrückstreuung wird durch Faserverunreinigungen verursachte Dichteschwankungen in optischen Standard-Einmodenfasern hervorgerufen, die bei der Fertigung von optischen Standard-Einmodenfasern zufällig entstehen. Durch die aufgrund derartiger Dichteschwankungen entstehenden lokalen Änderungen des Brechungsindexes in optischen Standard-Einmodenfasern wird das zu übertragende optische Signal in unterschiedliche Richtungen gestreut. Bei einer zu hohen Raman-Verstärkung, d.h. einer zu hohen Ramanpumpleistung, wird die "Amplified Spontanous Emission" (ASE), d.h. das von optischen Verstärkern dem optischen Signal bzw. Datensignal hinzugefügte optische Rauschen, des optischen Ramanverstärkers derartig erhöht, daß in der Übertragungsfaser eine selbstständige Oszillation des Ramanpumpsignals angeregt wird, wobei dieser Effekt insbesondere bei einer Ramanverstärkung deutlich größer als der Rayleighrückstreureflex zusätzlich verstärkt wird.

Daher wird die maximale in die optische Faser eingekoppelte optische Ramanpumpleistung bei bestehenden optischen Übertragungssystemen bzw. Ramanverstärkeranordnungen entsprechend gering gehalten, um ein derartiges Oszillieren zu vermeiden. Desweiteren ist beim Einsatz von Ramanpumpleistungen kleiner 1 Watt die erreichbare effektive Rauschzahl der Ramanverstärkeranordnung begrenzt - siehe hierzu Govind P. Agrawal, "Nonlinear Fiber Optics", Academic Press, 1995, auf den Seiten 477 bis 480, wodurch der optische Signal-Rausch-Abstand (OSNR) des optischen Datensignal zusätzlich verschlechtert wird.

Des Weiteren sind aus der Veröffentlichung "Ultra Low Nonlinearity Low Loss Pure Silica Core Fiber for Long-Haul WDM-Transmission" von T. Kato et al., Electronic Letters, vol.35, no.19, p.1615-17, September 1999, optische Fasern mit einem Faserquerschnitt von größer 110 µm² und einer geringen Dämpfungskonstante von 0,17 dB/km bei einer Signalwellenlänge von 1550 nm bekannt, welche einen im Vergleich zu herkömmlichen optischen Standard-Einmodenfasern um 30 % reduzierten Nichtlinearitätskoeffizienten aufweisen und somit eine nahezu verzerrungsfreie Übertragung von optischen Signalen über Entfernungen von einigen hundert Kilometern ermöglichen.

Ein weiterer Ramanverstärker ist aus EP-A-0 903 876 bekannt.

Die der Erfindung zugrundeliegende Aufgabe besteht darin, die Verstärkung von optischen Signalen unter Ausnutzung des Raman Effektes zu optimieren. Die Aufgabe wird ausgehend von einer Ramanverstärkeranordnung gemäß den Merkmalen des Oberbegriffs des Patentanspruches 1 durch die Merkmale des kennzeichnenden Teils gelöst.

Der wesentliche Aspekt der erfindungsgemäßen Ramanverstärkeranordnung ist darin zu sehen, daß als optisches Übertragungsmedium eine Serienschaltung aus einer sendeseitig angeordneten Standard-Einmodenfaser, einer ersten optischen Faser und einer empfangsseitig angeordneten zweiten optischen Faser vorgesehen ist, wobei ein optisches Pumpsignal empfangsseitig in die zweite optische Faser zur Erzeugung des Raman-Effektes in der ersten optischen Faser eingekoppelt wird und die erste optische Faser einen effektiven Faserquerschnitt kleiner als 60 µm² und eine Nichtlinearitätskonstante größer als 1*10¹ 1/W und die zweite optische Faser einen effektiven Faserquerschnitt größer als 100 µm² und eine Nichtlinearitätskonstante kleiner als 1*10⁻⁸ 1/W aufweist. Durch den erfindungsgemäß hohen effektiven Querschnitt von über 100 µm² und der geringen Nichtlinearitätskonstante von 1*10⁻⁸ 1/W der zweiten optischen Faser kann das optische Pumplicht mit nur geringem Dämpfungsverlust (ca. 3 dB) zur ersten optischen Faser übertragen werden, in der gezielt eine Verstärkung des optischen Datensignals mit Hilfe des erzeugten Raman-Effektes durchgeführt werden kann. Somit kann der Verstärkungspunkt weiter entfernt vom Empfänger (ca. > 80 km) gewählt werden, wodurch die regenerationsfrei überbrückbare optische Übertragungsstrecke erfindungsgemäß erhöht wird, d.h. das über die erfindungsgemäß verkürzte optische Standard-Einmodenfaser übertragene - somit weniger stark gedämpfte - optische Datensignal wird in einem weiter entfernt vom Empfänger angeordneten Verstärkungspunkt bereits verstärkt. Zusätzlich ist der Einfluß der Höhe des Rauschens der ASE im Vergleich zur Amplitude des Datensignals im Verstärkungspunkt aufgrund des weniger stark gedämpften Datensignals geringer, wodurch die effektive Rauschzahl der Ramanverstärkeranordnung verbessert wird.

Ein weiterer Vorteil der erfindungsgemäßen Ramanverstärkeranordnung ist darin zu sehen, daß die erste und zweite optische Faser einen Rayleighstreukoeffizienten kleiner als -33 dB und eine Faserdämpfung kleiner als 0,3 dB/km bei der jeweils vorgesehenen Pumpwellenlänge aufweist - Anspruch 2.

Durch die geringe Faserdämpfung und den kleinen Rayleighstreukoeffizienten können erfindungsgemäß hohe Pumpleistungen (ca. > 1 Watt) in das optische Übertragungsmedium eingekoppelt werden, ohne störende Oszillationen des Pumpsignals im Übertragungsmedium zu erzeugen.

Weitere vorteilhafte Ausgestaltungen der erfindungsgemäßen Ramanverstärkeranordnung sind den weiteren Ansprüchen zu entnehmen.

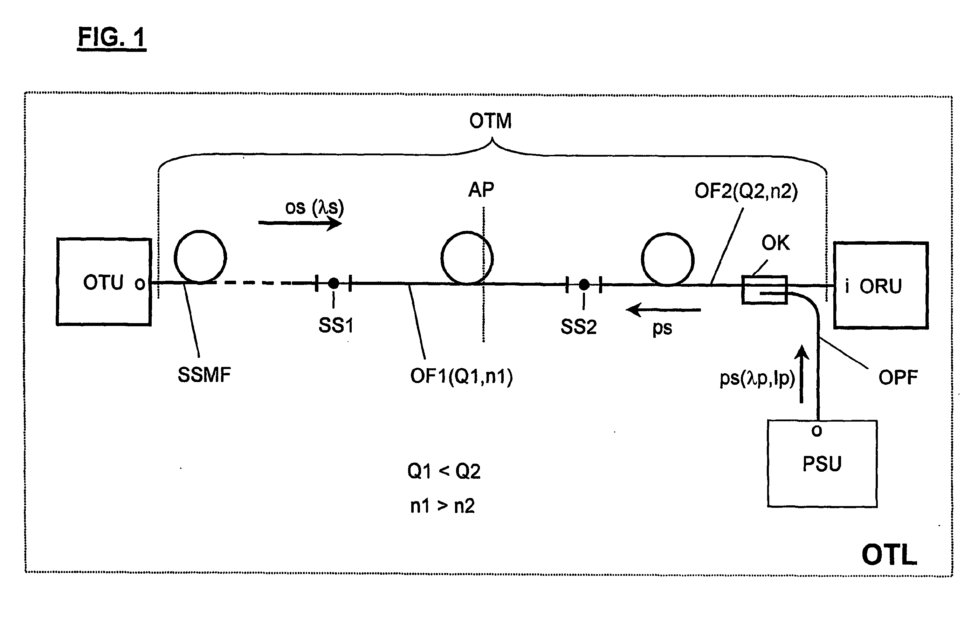

Die Erfindung wird im folgenden anhand von einem Blockschaltbild - Figur 1 - näher erläutert. Figur 1 zeigt hierzu beispielhaft in einem Blockschaltbild den schematischen Aufbau der erfindungsgemäßen Ramanverstärkeranordnung zur Verstärkung von optischen Signalen.

In Figur 1 ist beispielsweise eine optische Sendeeinheit OTU und eine optische Empfangseinheit ORU aufweisende, optische Übertragungsstrecke OTL dargestellt, wobei ein Ausgang o der optischen Sendeeinheit OTU über eine optische Standard-Einmodenfaser SSMF, eine erste und zweite optische Faser OF1,OF2 und einen optischen Koppler OK mit einem Eingang i der optischen Empfangseinheit ORU verbunden ist. Die Übergangsstellen zwischen optischer Standard-Einmodenfaser SSMF und erster optischer Faser OF1 bzw. zwischen erster und zweiter optischer Faser OF1,OF2 sind in Figur 1 als erste bzw. zweite optische Spleisstelle SS1,SS2 bezeichnet. Des weiteren ist der optische Koppler OK über eine optische Pumpfaser OPF an eine einen Ausgang o aufweisende optische Pumpsignaleinheit PSU angeschlossen. Hierbei ist das optische Übertragungsmedium OTM erfindungsgemäß aus einer Serienschaltung der optischen Standard-Einmodenfaser SSMF, der ersten und zweiten optischen Faser OF1,OF2 zusammengesetzt.

Desweiteren weist erfindungsgemäß die erste optische Faser OF1 einen ersten effektiven Faserquerschnitt Q1 kleiner als 60 µm² und eine erste Nichtlinearitätskonstante nl größer als 1*10¹ 1/W und die zweite optische Faser OF2 einen zweiten effektiven Faserquerschnitt Q2 größer als 100 µm² und eine zweite Nichtlinearitätskonstante n2 kleiner als 1*10⁻⁸ 1/W auf, d.h. der erste effektive Faserquerschnitt Q1 ist kleiner als der zweite effektive Faserquerschnitt Q2 und die erste Nichtlinearitätskonstante n1 ist größer als die zweite Nichtlinearitätskonstante n2. Zusätzlich weisen die erste und zweite optische Faser OF1,OF2 einen Rayleighstreukoeffizienten beispielsweise kleiner als -33 dB und eine Faserdämpfung kleiner als 0,3 dB/km bei der jeweils vorgesehenen Pumpwellenlänge λₚ, beispielsweise 1450 nm, auf.

Gemäß Figur 1 wird ein optisches Datensignal bzw. Signal os mit einer Wellenlänge λs, beispielsweise 1550 nm, von der optischen Sendeeinheit OTU erzeugt, am Ausgang o abgegeben und anschließend in die optische Standard-Einmodenfaser SSMF eingekoppelt. Das optische Signal os (λs) wird im folgenden vom Ausgang o der optischen Sendeeinheit OTU über die optische Standard-Einmodenfaser SSMF, über die erste optische Faser OF1, über die zweite optische Faser OF2 und über den optischen Koppler OK zum Eingang i der optischen Empfangseinheit ORU übertragen, wobei durch die strichliert gezeichnete, optische Standard-Einmodenfaser SSMF die bei bislang realisierten optischen Übertragungsstrecken OTL vorliegende Entfernung, beispielsweise von mehreren hundert Kilometern, zwischen optischer Sende- und Empfangseinheit OTU,ORU angedeutet wird. Desweiteren ist der Verstärkungspunkt AP bzw. der Abschnitt der ersten optischen Faser OF1 beispielhaft durch eine punktiert gezeichnete Linie angedeutet, an bzw. in dem das optische Signal os(λs) verstärkt werden sollte, um eine weitere verlustarme Übertragung des optischen Signals os zur optischen Empfangseinheit ORU zu gewährleisten bzw. um am Eingang i der optischen Empfangseinheit ORU das optische Signal os rückgewinnen zu können.

In der optischen Pumpsignaleinheit PSU wird ein optisches Pumpsignal ps mit einer zuvor festgelegten Pumpwellenlänge λp und einer Pumpintensität Ip erzeugt und vom Ausgang o der Pumpsignaleinheit PSU über die optische Pumpfaser OPF an den optischen Koppler übertragen. Das optische Pumpsignal ps wird mit Hilfe des optischen Kopplers OK in die zweite optische Faser OF eingekoppelt und breitet sich entgegengesetzt zur Übertragungsrichtung des optischen Signals os von der zweiten zur ersten optischen Faser OF1,OF2 aus. Durch das optische Pumpsignal ps wird in der ersten optischen Faser OF1 der Raman-Effekt initiiert, d.h. es entsteht in der ersten optischen Faser OF ein Raman-Linienspektrum bzw. mehrere StokesWellen unterschiedlicher Wellenlänge durch die das optische Signal os in der ersten optischen Faser OF1 an einem Verstärkungspunkt AP eine gezielte Verstärkung erfährt. Durch die geringe Faserdämpfung in der ersten und zweiten optischen Faser OF1,OF2 und den jeweils kleinen Rayleighstreukoeffizienten können erfindungsgemäß hohe Pumpleistungen (ca. > 1 Watt) in das optische Übertragungsmedium OTM eingekoppelt werden, ohne das durch eingekoppelte Pumpsignals ps störende Oszillationen im Übertragungsmedium OTM hervorgerufen werden.

Desweiteren wird erfindungsgemäß durch den zweiten hohen effektiven Faserquerschnitt Q2 von beispielsweise über 100 µm² und die geringe erste Nichtlinearitätskonstante von 1*10⁻⁸ 1/W das optische Pumpsignal ps in der zweiten optischen Faser OF2 mit nur geringem Dämpfungsverlust (ca. 3 dB) zur ersten optischen Faser OF2 übertragen. In dieser kann anschließend gezielt eine effektive Verstärkung des optischen Datensignals os mit Hilfe des in der ersten optischen Faser OF1 durch das Pumpen mit dem optischen Pumpsignal ps erzeugten Raman-Effektes durchgeführt werden. Somit kann der Verstärkungspunkt AP weiter entfernt vom der optischen Empfangseinheit ORU (ca. > 80 km) gewählt werden, wodurch die regenerationsfrei überbrückbare optische Übertragungsstrecke erfindungsgemäß erhöht wird, d.h. das über die erfindungsgemäß verkürzte optische Standard-Einmodenfaser SSMF übertragene und somit weniger stark gedämpfte, optische Signal os wird in einem weiter entfernt vom der optischen Empfangseinheit ORU angeordneten Verstärkungspunkt AP vorverstärkt. Zusätzlich wird hierdurch der Einfluß der Höhe des Rauschens der ASE im Vergleich zur Amplitude des optischen Signals os im Verstärkungspunkt AP aufgrund des weniger stark gedämpften optischen Signals os deutlich reduziert, wodurch die effektive Rauschzahl der Ramanverstärkeranordnung verbessert wird.

Gegebenenfalls können mehrere optische Pumpsignale ps mit unterschiedlichen Pumwellenlängen λₚ in der Pumpsignaleinheit PSU erzeugt und über die optische Pumpfaser OPF und den optischen Koppler OK in die zweite optische Faser OF2 eingekoppelt werden - in Figur 1 nicht dargestellt. Hierdurch kann eine Formung des Raman-Linienspektrums realisiert werden, womit mehrere optische Datensignale bzw. in unterschiedlichen optischen Kanälen und/oder optischen Frequenzbändern übertragene optische Übertragungssignale os effektiv verstärkt werden können.

Die erfindungsgemäße Ramanverstärkeranordnung ist keinesfalls auf WDM-Übertragungssysteme beschränkt, sondern kann zur Verstärkung von optischen Signalen OS auf beliebigen optischen Übertragungstrecken OTL eingesetzt werden.

## Patentansprüche

1. Ramanverstärkeranordnung zur Verstärkung von über ein Übertragungsmedium (OTM) übertragenen optischen Signalen (os),
**dadurch gekennzeichnet,**
**daß** als optisches Übertragungsmedium (OTM) eine Serienschaltung aus einer sendeseitig angeordneten Standard-Einmodenfaser (SSMF), einer ersten optischen Faser (OF1) und einer empfangsseitig angeordneten zweiten optischen Faser (OF2) vorgesehen ist, wobei ein optisches Pumpsignal (ps) empfangsseitig in die zweite optische Faser (OF2) zur Erzeugung des Raman-Effektes in der ersten optischen Faser (OF1) eingekoppelt wird und die erste optische Faser (OF1) einen effektiven Faserquerschnitt (Q1) kleiner als 60 µm² und eine Nichtlinearitätskonstante (n1) größer als 1*10¹ 1/W und die zweite optische Faser (OF2) einen effektiven Faserquerschnitt (Q2) größer als 100 µm² und eine Nichtlinearitätskonstante (n2) kleiner als 1*10⁻⁸ 1/W aufweist.

2. Ramanverstärkeranordnung nach Anspruch 1,
**dadurch gekennzeichnet,**
**daß** die erste und zweite optische Faser einen Rayleighstreukoeffizienten kleiner als -33 dB und eine Faserdämpfung kleiner als 0,3 dB/km bei der jeweils vorgesehenen Ramanpumpwellenlänge aufweist.

3. Ramanverstärkeranordnung nach Anspruch 1 oder 2,
**dadurch gekennzeichnet,**
**daß** eine optische Koppeleinheit (OK) zur Einkopplung des in einer optischen Pumpsignaleinheit (PSU) erzeugten optischen Pumpsignals (ps) in die zweite optische Faser (OF2) vorgesehen ist.

4. Ramanverstärkeranordnung nach einem der Ansprüche 1 bis 3,
**dadurch gekennzeichnet,**
**daß** die Länge der zweiten optischen Faser (OF2) abhängig von der Dämpfung des optischen Pumpsignals (ps) im Bereich von 30 - 80 km liegt.

## Claims

1. A Raman amplifier system for amplifying optical signals (os) transmitted over an optical transmission medium (OTM), **characterized in that**
a series circuit is provided as the optical transmission medium (OTM), the series circuit comprising a standard single-mode fibre (SSMF) located on a transmit side, a first optical fibre (OF1) and a second optical fibre (OF2) located on a receive side, with an optical pump signal (ps) being launched into the second optical fibre (OF2) to produce a Raman effect in the first optical fibre (OF1) and the first optical fibre (OF1) having an effective fibre cross-section of less than 60 µm² and a nonlinearity constant (n1) of more than 1*10¹ 1/W and the second optical fibre (OF2) having an effective fibre cross-section (Q2) of more than 100 µm² and a nonlinearity constant (n2) of less than 1*10⁻⁸ 1/M,

2. Raman amplifier system according to claim 1, **Characterized, in that**
the first and the second optical fibre have a Rayleigh scattering coefficient of less than -33 dB and a fibre damping of less than 0.3 dB/km at the respective given Raman pump wavelength.

3. Raman amplifier system according to claim 1 or 2, **Characterized in that**
an optical coupling unit (OK) is provided for launching the optical pump signal (ps) generated in an optical pump signal unit (PSU) into the second optical fibre (OF2).

4. Raman amplifier system according one of the claims 1 to 3, **Characterized in that**
the length of the second optical fibre (OF2) depends on the attenuation of the optical pump signal (ps) and lies in a range from 30 to 80 Km.

## Revendications

1. Dispositif amplificateur Raman pour l'amplification de signaux optiques (os) transmis par un milieu de transmission (OTM),
**caractérisé en ce que**, comme milieu de transmission optique (OTM), il est prévu un montage en série d'une fibre monomode standard (SSMF) disposée côté émission, d'une première fibre optique (OF1) et d'une seconde fibre optique (OF2) disposée côté réception, un signal de pompage optique (ps) étant injecté côté réception dans la seconde fibre optique (OF2) pour générer l'effet Raman dans la première fibre optique (OF1) et la première fibre optique (OF1) présentant une section de fibre efficace (Q1) inférieure à 60 µm² et une constante de non-linéarité (n1) supérieure à 1*10¹ 1/W et la seconde fibre optique (OF2) présentant une section de fibre efficace (Q2) supérieure à 100 µm² et une constante de non-linéarité (n2) inférieure à 1*10⁻⁸ 1/W.

2. Dispositif amplificateur Raman selon la revendication 1, **caractérisé en ce que** la première et la seconde fibres optiques présentent un coefficient de diffusion de Rayleigh inférieur à -33 dB et une atténuation de fibre inférieure à 0,3 dB/km à la longueur d'onde de pompage Raman respectivement prévue.

3. Dispositif amplificateur Raman selon la revendication 1 ou 2, **caractérisé en ce qu'**une unité de couplage optique (OK) est prévue pour l'injection du signal de pompage optique (ps) généré dans une unité de signal de pompage optique (PSU) dans la seconde fibre optique (OF2).

4. Dispositif amplificateur Raman selon l'une quelconque des revendications 1 à 3, **caractérisé en ce que** la longueur de la seconde fibre optique (OF2) se situe dans la plage de 30 à 80 km en fonction de l'atténuation du signal de pompage optique (ps).
